# EUROPÄISCHE PATENTANMELDUNG

(11) **EP 2 899 426 A1**
(43) Veröffentlichungstag der Anmeldung: **29.07.2015**
(21) Anmeldenummer: 14194978.4
(22) Anmeldetag: 26.11.2014
(51) Int. Cl.: F16F 15/131, F16F 15/14

(54) **Drehschwingungsdämpfer**

(30) Priorität: 22.01.2014 DE 102014201070
(71) Anmelder: Schaeffler Technologies AG & Co. KG, 91074 Herzogenaurach (DE)
(72) Erfinder: Herrmann, Robert, 77830 Bühlertal (DE); Neumaier, Frank, 77796 Mühlenbach (DE); Krause, Thorsten, 77815 Bühl (DE)

(57) **Zusammenfassung**

Es ist ein Drehschwingungsdämpfer zum Tilgen und/oder Dämpfen von Drehschwingungen in einem Antriebsstrang eines Kraftfahrzeugs vorgesehen mit einer Eingangsscheibe zum Einleiten eines Drehmoments, einer relativ zur Eingangsscheibe verdrehbare Tilgerscheibe zum Einleiten eines einer Drehschwingung entgegen gerichteten Gegenmoments, wobei die Tilgerscheibe mindestens eine mit einem Anteil in Umfangsrichtung verlaufende Bogennut aufweist, einer in der Bogennut der Tilgerscheibe geführten Laufrolle und einem mit der Laufrolle und der Eingangsscheibe verbundenen Koppelelement zur Übertragung eines Drehmoments zwischen der Eingangscheibe und der Tilgerscheibe, wobei das Koppelelement um eine zu einer Rollendrehachse der Laufrolle in Umfangsrichtung beabstandete im Wesentlichen axial verlaufende Koppeldrehachse drehbar mit der Eingangsscheibe verbunden ist. Durch die in Umfangsrichtung versetzte Anbindung des Koppelelements mit der Tilgerscheibe und der Eingangscheibe kann eine kurzzeitig fehlende Abstützung der Laufrolle an der Eingangsscheibe in einem Betriebszustand, wenn die auf die Laufrolle wirkenden Beschleunigungskräfte bei zu tilgenden Drehschwingungen maximal sind, vermieden werden, wodurch ein geräuschbehaftetes und verschleißbehaftetes Durchrutschen der Laufrolle in der Bogennut der Tilgerscheibe vermieden werden kann, so dass eine geräuscharme Dämpfung und/oder Tilgung von Drehschwingungen mit einem geringen Verschleiß in einem Antriebsstrang eines Kraftfahrzeugs ermöglicht ist.

## Beschreibung

Die Erfindung betrifft einen Drehschwingungsdämpfer, mit dessen Hilfe Drehschwingungen insbesondere in einem Antriebsstrang eines Kraftfahrzeugs gedämpft beziehungsweise ganz oder teilweise getilgt werden können.

Aus DE 10 2010 052 388 A1 ist ein Drehschwingungsdämpfer bekannt, bei dem eine radial verlaufende Radialnuten aufweisende Eingangsscheibe mit einer in Umfangsrichtung verlaufende Bogennuten aufweisenden Tilgerscheibe gekoppelt ist, indem eine erste Rolle in der Radialnut und eine konzentrisch an der ersten Rolle gelagerte zweite Rolle in der Bogennut geführt ist. Bei über die Eingangsscheibe eingeleiteten Drehschwingungen kann über die Rollen in der Art eines Fliehkraftpendels die Tilgerscheibe relativ zur Eingangsscheibe hin und her verdreht werden, um die Drehschwingungen zumindest teilweise zu tilgen.

Es besteht ein ständiges Bedürfnis Drehschwingungen in einem Antriebsstrang eines Kraftfahrzeugs geräuscharm und mit geringem Verschleiß zu dämpfen und/oder zu tilgen.

Es ist die Aufgabe der Erfindung Maßnahmen aufzuzeigen, die geräuscharm und mit einem geringen Verschleiß eine Dämpfung und/oder Tilgung von Drehschwingungen in einem Antriebsstrang eines Kraftfahrzeugs ermöglichen.

Die Lösung der Aufgabe erfolgt erfindungsgemäß durch einen Drehschwingungsdämpfer mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Drehschwingungsdämpfer zum Tilgen und/oder Dämpfen von Drehschwingungen in einem Antriebsstrang eines Kraftfahrzeugs vorgesehen mit einer Eingangsscheibe zum Einleiten eines Drehmoments, einer relativ zur Eingangsscheibe verdrehbare Tilgerscheibe zum Einleiten eines einer Drehschwingung entgegen gerichteten Gegenmoments, wobei die Tilgerscheibe mindestens eine mit einem Anteil in Umfangsrichtung verlaufende Bogennut aufweist, einer in der Bogennut der Tilgerscheibe geführten Laufrolle und einem mit der Laufrolle und der Eingangsscheibe verbundenen Koppelelement zur Übertragung eines Drehmoments zwischen der Eingangscheibe und der Tilgerscheibe, wobei das Koppelelement um eine zu einer Rollendrehachse der Laufrolle in Umfangsrichtung beabstandete im Wesentlichen axial verlaufende Koppeldrehachse drehbar mit der Eingangsscheibe verbunden ist.

Durch das Koppelelement ist die Anbindung der Tilgerscheibe und der Eingangscheibe nicht koaxial sondern innerhalb der Radialebene des Drehschwingungsdämpfers versetzt angeordnet. Hierbei wird die Erkenntnis ausgenutzt, dass bei einer koaxialen Anbindung der Tilgerscheibe und der Eingangscheibe über eine in einer Bogennut der Tilgerscheibe und einer Radialnut der Eingangscheibe geführtes Rollenpaar, durch das Hin- und Herdrehen der Tilgerscheibe relativ zur Eingangscheibe beim Tilgen von über die Eingangscheibe eingeleiteten Drehschwingungen eine Rolle des Rollenpaars je nach Relativdrehung der Tilgerscheibe zur Eingangscheibe entweder gegen die eine Flanke der Radialnut oder die zu dieser Flanke gegenüberliegende Flanke der Radialnut drückt. Es erfolgt also im Betrieb ein Flankenwechsel der Rolle in der Radialnut. Da die Rolle innerhalb der Radialnut in radialer Richtung bewegbar geführt ist, muss eine Spielpassung zwischen der Rolle und der Radialnut vorgesehen sein, so dass es während eines Flankenwechsels einen zumindest sehr kurzen, aber nicht vermeidbaren, Zustand gibt, in dem die Rolle weder an der einen noch an der anderen Flanke abgestützt ist. Da der Flankenwechsel zu einem Zeitpunkt stattfinden, zu dem auf die Rolle eine besonders hohe Beschleunigung wirkt, können die auf das Rollenpaar wirkenden Reibungskräfte überwunden werden, so dass das Rollenpaar mit Schlupf in der Bogennut durchrutschen kann. Dieses Durchrutschen kann zu unnötigen Geräuschentwicklungen und einen erheblichen Verschleiß der durchrutschenden Rolle führen. Durch die in der Radialebene versetzte Anbindung des Koppelelements mit der Tilgerscheibe und der Eingangscheibe kann das Koppelelement vergleichbar zu einem Pleuel eines Kurbeltriebs als ein Hebel wirken, der ein Drehmoment zwischen der Eingangsscheibe und der Tilgerscheibe übertragen kann und zumindest mit einem erheblichen Anteil im Bereich der Laufrolle eine Auf- und Abbewegung in radialer Richtung ausführen kann. Dadurch kann eine Radialnut eingespart werden, so dass ein Flankenwechsel einer Rolle in der Radialnut und ein geräuschbehaftetes und verschleißbehaftetes Durchrutschen der Laufrolle in der Bogennut der Tilgerscheibe vermieden werden kann. Insbesondere ist die Anbindung des Koppelelements mit der Tilgerscheibe einerseits und mit der Eingangscheibe andererseits in Umfangsrichtung versetzt, so dass auf das Koppelelement wirkende Fliehkräfte dazu führen können, dass zumindest in einem Betriebszustand, wenn die auf die Laufrolle wirkenden Beschleunigungskräfte bei Drehschwingungen maximal sind, das Koppelelement an der Eingangsscheibe abgestützt ist. Durch die in Um-fangsrichtung versetzte Anbindung des Koppelelements mit der Tilgerscheibe und der Eingangscheibe kann eine kurzzeitig fehlende Abstützung der Laufrolle an der Eingangsscheibe in einem Betriebszustand, wenn die auf die Laufrolle wirkenden Beschleunigungskräfte bei zu tilgenden Drehschwingungen maximal sind, vermieden werden, wodurch ein geräuschbehaftetes und verschleißbehaftetes Durchrutschen der Laufrolle in der Bogennut der Tilgerscheibe vermieden werden kann, so dass eine geräuscharme Dämpfung und/oder Tilgung von Drehschwingungen mit einem geringen Verschleiß in einem Antriebsstrang eines Kraftfahrzeugs ermöglicht ist.

Die Tilgerscheibe ist über die in der Bogennut der Tilgerscheibe geführte Laufrolle relativ zur Eingangsscheibe geführt. Die Laufrolle und das Koppelelement haben unter Fliehkrafteinfluss das Bestreben eine möglichst weit vom Drehzentrum entfernte Stellung anzunehmen. Die "Nulllage" ist also grundsätzlich die radial am weitesten vom Drehzentrum entfernte Stellung, welche die Laufrolle in der radial äußeren Stellung einnehmen kann. Bei einer konstanten Antriebsdrehzahl und konstantem Antriebsmoment kann die Laufrolle diese radial äußere Stellung einnehmen. Bei Drehzahlschwankungen lenkt die Tilgerscheibe aufgrund ihrer Massenträgheit relativ zur Eingangsscheibe in Umfangsrichtung aus. Die Laufrolle kann dadurch entlang der Bogennut in Richtung des Drehzentrums verschoben werden. Die Fliehkraft auf die Laufrolle und das Koppelelement wird dadurch aufgeteilt in eine Komponente tangential und eine weitere Komponente normal zur Bogennut. Die tangentiale Kraftkomponente stellt die Rückstellkraft bereit, welche die Tilgerscheibe wieder in ihre "Nulllage" bringen will, während die Normalkraftkomponente auf die Eingangsscheibe einwirkt und dort ein Gegenmoment erzeugt, das der Drehzahlschwankung entgegenwirkt und die eingeleiteten Drehzahlschwankungen dämpft. Bei besonders starken Drehzahlschwankungen kann die jeweilige Tilgerscheibe also mit einem maximalen Schwingwinkel maximal ausgeschwungen sein, wobei die Laufrolle die radial am weitesten innen liegende Stellung annehmen kann. Die Laufbahn in der Bogennut weist hierzu eine geeignete Krümmung auf. Insbesondere ist mehr als eine Laufrolle und mehr als eine Bogennut vorgesehen. Vorzugsweise sind zwei Tilgerscheiben vorgesehen, zwischen denen die Eingangsscheibe vorgesehen ist, wobei insbesondere die Laufrolle in den entsprechenden Bogennuten beider Tilgerscheiben eingesetzt und geführt ist. Die Eingangsscheibe des Drehschwingungsdämpfers kann insbesondere mit einer Antriebswelle, insbesondere Kurbelwelle, eines Kraftfahrzeugmotors und/oder mit einer Getriebeeingangswelle eines Kraftfahrzeuggetriebes und/oder mit einer Primärseite eines Zweimassenschwungrads und/oder einer Sekundärseite eines Zweimassenschwungrads innerhalb des Antriebsstrangs des Kraftfahrzeugs gekoppelt werden.

Insbesondere weist das Koppelelement eine träge Masse auf, wobei die träge Masse so hoch ist, dass das Koppelelement oberhalb einer definierten Mindestdrehzahl der Eingangscheibe, insbesondere einer Leerlaufdrehzahl eines Kraftfahrzeugmotors, fliehkraftbedingt an einer Verbindungsstelle mit der Eingangsscheibe mit einer nach radial außen gerichteten Normalkraft an der Eingangscheibe angreift. Die träge Masse und deren räumliche Verteilung sowie das Massenträgheitsmoment des Koppelelements kann insbesondere für eine Leerlaufdrehzahl von 1000 U/min, vorzugsweise 800 U/min und besonders bevorzugt 750 U/min ausgelegt sein. Unter Fliehkrafteinfluss im regulären Betrieb eines Kraftfahrzeugmotors kann das Koppelelement nach radial außen gedrückt werden, so dass ein Spiel an der Verbindungsstelle mit der Eingangsscheibe zwischen dem Koppelelement und der Eingangsscheibe fliehkraftbedingt überwunden ist und eine Abstützung des Koppelelements an der Eingangsscheibe durch die an dem Koppelelement angreifenden Fliehkräfte aufrecht erhalten bleibt. Insbesondere ist dadurch über den gesamten Schwingwinkel der Tilgerscheibe relativ zur Eingangsscheibe eine unterbrechungsfreie Abstützung des Koppelelements an der Eingangsscheibe erreicht.

Vorzugsweise weist das Koppelelement eine träge Masse auf, wobei die träge Masse so hoch ist, dass das Koppelelement oberhalb einer definierten Mindestdrehzahl der Eingangscheibe, insbesondere einer Leerlaufdrehzahl eines Kraftfahrzeugmotors, fliehkraftbedingt die Laufrolle nach radial außen gegen die Tilgerscheibe drückt. Die träge Masse und deren räumliche Verteilung sowie das Massenträgheitsmoment des Koppelelements kann insbesondere für eine Leerlaufdrehzahl von 1000 U/min, vorzugsweise 800 U/min und besonders bevorzugt 750 U/min ausgelegt sein. Unter Fliehkrafteinfluss im regulären Betrieb eines Kraftfahrzeugmotors kann das Koppelelement nach radial außen gedrückt werden, so dass ein Spiel zwischen der Laufrolle und der Bogennut fliehkraftbedingt überwunden ist und eine Abstützung des Koppelelements an der Tilgerscheibe durch die an dem Koppelelement angreifenden Fliehkräfte aufrecht erhalten bleibt. Insbesondere ist dadurch über den gesamten Schwingwinkel der Tilgerscheibe relativ zur Eingangsscheibe eine unterbrechungsfreie Abstützung des Koppelelements an der Tilgerscheibe erreicht.

Besonders bevorzugt ist das Koppelelement über ein Wälzlager oder Gleitlager mit der Eingangscheibe verbunden. Das Koppelelement kann mit einem Innenring des Wälz- oder Gleitlagers verbunden sein, während die Eingangscheibe mit einem Außenring des Wälzoder Gleitlagers verbunden ist, oder umgekehrt. Durch das des Wälz- oder Gleitlager kann über ein kostengünstiges Normbauteil eine ausreichende Übertragung eines Drehmoments erreicht werden, wobei ein radiales Lagerspiel mit geringen Kosten besonders klein gehalten werden kann. Ferner können Reibungsverluste bei einer Relativbewegung des Koppelelements zur Eingangsscheibe minimiert werden.

Insbesondere weist das Koppelelement ein Federelement zur federnden Verbindung der Tilgerscheibe mit der Eingangscheibe auf. Das Federelement ist beispielweise als Blattfeder ausgestaltet. Das Federelement kann einerseits ein ausreichend großes Drehmoment übertragen und gleichzeitig unter Fliehkrafteinfluss drehzahlabhängig die Relativlage der Tilgerscheibe zur Eingangsscheibe in der Nulllage in Umfangsrichtung verändern, wodurch sich auch eine an der Laufrolle angreifende Federkraft des Federelements drehzahlabhängig verändern kann. Dies ermöglicht einen zusätzlichen Einfluss für eine drehzahladaptive Schwingungstilgung beziehungsweise -dämpfung. Insbesondere ist das Federelement in der Nulllage vorgespannt, so dass beispielsweise durch die zusätzliche Federkraft eine erhöhte Kraft nach radial außen auf die Laufrolle ausgeübt werden kann.

Vorzugsweise weist das Koppelelement eine Koppelbogennut auf, wobei die Laufrolle in der Koppelbogennut geführt ist. Die Laufrolle ist insbesondere über eine konzentrisch zur Laufrolle an der Laufrolle relativ verdrehbar gelagerte Zusatzlaufrolle in der Koppelbogennut geführt. Die Koppelbogennut ist hierzu insbesondere als eine bogenförmige Nut mit einer geeignet gewählten Krümmung ausgestaltet. Durch die Koppelbogennut kann das Koppelelement in Abhängigkeit des Schwingwinkels der Tilgerscheibe eine Relativbewegung zur Laufrolle, insbesondere mit einem Anteil in radialer Richtung, ausführen, so dass sich die von dem Koppelelement aufgeprägten Fliehkräfte ändern können. Dies ermöglicht einen zusätzlichen Einfluss für eine drehzahladaptive Schwingungstilgung beziehungsweise -dämpfung.

Besonders bevorzugt weist das Koppelelement eine von einer Verbindungsstelle mit der Eingangsscheibe zur Laufrolle verlaufende Längsrichtung auf, wobei das Koppelelement in einer in einer Radialebene des Drehschwingungsdämpfers verlaufenden Querrichtung quer zur Längsrichtung eine größere Quererstreckung als die Laufrolle aufweist. Dadurch kann das Koppelelement bei einer vergleichsweise geringen Erstreckung in axialer Richtung parallel zur Drehachse des Drehschwingungsdämpfers eine größere träge Masse und ein größeres Massenträgheitsmoment als die Laufrolle aufweisen. Eine ausreichende und insbesondere unterbrechungsfreie Abstützung des Koppelelements an der Tilgerscheibe und/oder der Eingangsscheibe kann dadurch gewährleistet werden.

Insbesondere ist die Quererstreckung des Koppelelements bei der Laufrolle größer als bei der Verbindungsstelle mit der Eingangsscheibe. Das Koppelelement kann entlang der Längsrichtung eine sich verändernde Quererstreckung aufweisen, die insbesondere von der Laufrolle zur Verbindungsstelle mit der Eingangsscheibe abnehmend ausgeführt ist. Dadurch kann im Bereich der Laufrolle von dem Koppelelement eine höhere Fliehkraft als im Bereich der Verbindungsstelle mit der Eingangsscheibe bereitgestellt werden. Die Laufrolle kann dadurch mit einer größeren Spielpassung in der Bogennut geführt sein, so dass bei geringeren Herstellungskosten eine ausreichende Abstützung gegeben sein kann.

Vorzugsweise weist die Eingangsscheibe einen radial abstehenden Befestigungsarm auf, wobei das Koppelelement mit dem Befestigungsarm verbunden ist. Die Eingangsscheibe braucht dadurch nicht als Vollscheibe im Sinne eines mathematischen Kreises oder Rings ausgestaltet sein. Stattdessen kann die Eingangsscheibe beispielsweise einen Befestigungsring mit einer Steckverzahnung aufweisen, von dem der Befestigungsarm abstehen kann. Insbesondere kann das Koppelelement zu einem Großteil in einem Winkelbereich angeordnet sein, in dessen Radiusbereich der Bauraum frei von der Eingangsscheibe ist. Dadurch überlappen sich die Eingangsscheibe und das Koppelelement in axialer Richtung betrachten nur einem vergleichsweise geringen Teilbereich des Befestigungsarms. Unnötige Unwuchten können dadurch vermieden werden.

Die Erfindung betrifft ferner einen Antriebsstrang für eine Kraftfahrzeug mit einem eine Antriebswelle aufweisenden Kraftfahrzeugmotor, einem mit der Antriebswelle koppelbaren mindestens eine Getriebeeingangswelle aufweisenden Kraftfahrzeuggetriebe und mindestens einem Drehschwingungsdämpfer, der wie vorstehend beschrieben aus- und weitergebildet sein kann, zur Dämpfung und/oder Tilgung von Drehschwingungen der Antriebswelle, wobei insbesondere die Eingangsscheibe des Drehschwingungsdämpfers mit der Antriebswelle und/oder mit der Getriebeeingangswelle verbunden ist. der Antriebsstrang kann insbesondere wie vorstehend anhand des Drehschwingungsdämpfers beschrieben aus- und weitergebildet sein. Durch die in Umfangsrichtung versetzte Anbindung des Koppelelements mit der Tilgerscheibe und der Eingangscheibe des Drehschwingungsdämpfers kann eine kurzzeitig fehlende Abstützung der Laufrolle an der Eingangsscheibe in einem Betriebszustand, wenn die auf die Laufrolle wirkenden Beschleunigungskräfte bei zu tilgenden Drehschwingungen maximal sind, vermieden werden, wodurch ein geräuschbehaftetes und verschleißbehaftetes Durchrutschen der Laufrolle in der Bogennut der Tilgerscheibe vermieden werden kann, so dass eine geräuscharme Dämpfung und/oder Tilgung von Drehschwingungen mit einem geringen Verschleiß in dem Antriebsstrang des Kraftfahrzeugs ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht einer ersten Ausführungsform eines Drehschwingungsdämpfers,
Fig. 2: eine schematische Draufsicht einer zweiten Ausführungsform eines Drehschwingungsdämpfers und
Fig. 3: eine schematische Draufsicht einer dritten Ausführungsform eines Drehschwingungsdämpfers.

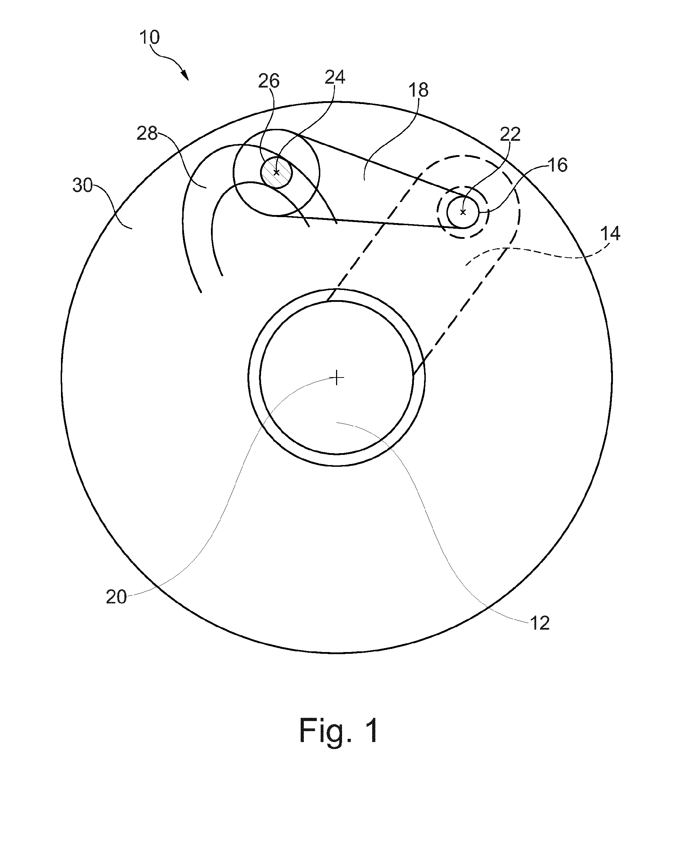

Der in Fig. 1 dargestellte Drehschwingungsdämpfer 10 weist eine Eingangscheibe 12 auf, die beispielsweise mit einer Kurbelwelle eines Kraftfahrzeugmotors oder einer Getriebeeingangswelle eines Kraftfahrzeuggetriebes drehfest verbunden sein kann. Die Eingangsscheibe 12 weist einen nach radial außen abstehenden Befestigungsarm 14 auf, der über ein Lager 16 mit einem pleuelartigen Koppelelement 18 um eine parallel zu einer Drehachse 20 des Drehschwingungsdämpfers 10 in axialer Richtung verlaufende Koppeldrehachse 22 drehbar verbunden ist. Hierbei bildet das Lager 16 eine Befestigungsstelle des Koppelelements 18 mit der Eingangsscheibe 12 aus. Das Koppelelement 18 ist zu dem Lager 16 in Umfangsrichtung beabstandet mit einer um eine parallel zu der Drehachse 20 des Drehschwingungsdämpfers 10 in axialer Richtung verlaufende Rollendrehachse 24 drehbare Laufrolle 26 verbunden. Die Laufrolle 26 ist in einer Bogennut 28 mindestens einer Tilgerscheibe 30 geführt, so dass die Tilgerscheibe 30 als drehzahladaptiver Tilger über die Eingangsscheibe 12 Drehschwingungen dämpfen bzw. tilgen kann, indem die Tilgerscheibe 30 aufgrund ihrer Massenträgheit rela-tiv zur Eingangsscheibe 12 hin und her verdreht werden kann und ein die Drehschwingung zumindest teilweise tilgendendes Rückstellmoment in die Eingangsscheibe 12 einleiten kann. Dadurch dass mit Hilfe des massebehafteten und im Betrieb unter Fliehkraft stehenden Koppelelements 18 die Koppeldrehachse 22 zur Rollendrehachse 24 in Umfangsrichtung beabstandet ist, kann zu jedem Zeitpunkt die Laufrolle 26 an der Bogennut 28 der Tilgerscheibe 30 und das Koppelelement 18 an der Eingangsscheibe 12 abgestützt sein, so dass ein geräuschbehaftetes und verschleißintensives Durchrutschen der Laufrolle 26 in der Bogennut 28 vermieden ist. Vorzugsweise sind zwei Tilgerscheiben 30 vorgesehen, zwischen denen die Eingangsscheibe 12 vorgesehen ist, wobei insbesondere die Laufrolle 26 in den entsprechenden Bogennuten 28 beider Tilgerscheiben 30 eingesetzt und geführt ist.

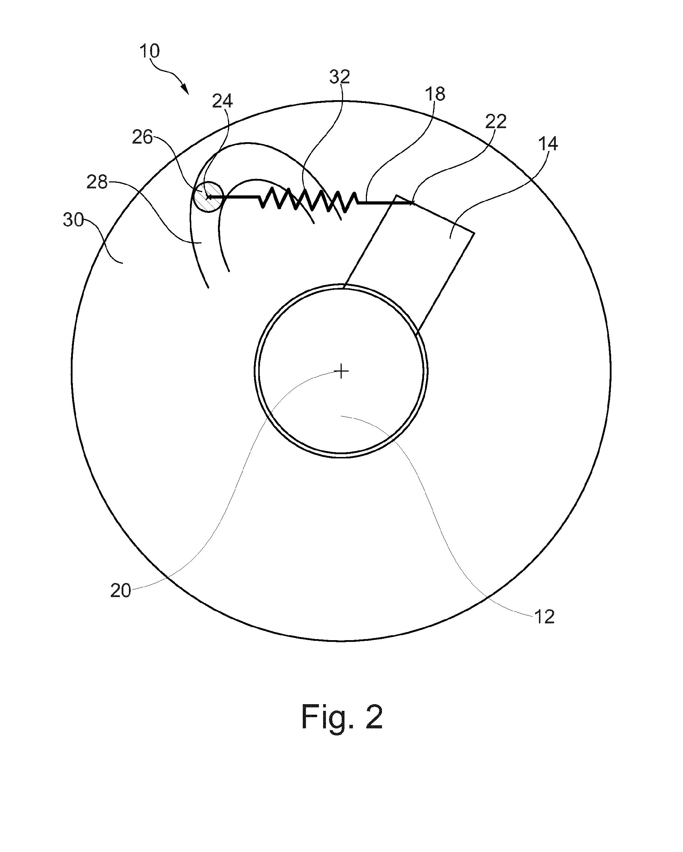

Bei der in Fig. 2 dargestellten Ausführungsform des Drehschwingungsdämpfers 10 kann im Vergleich zu der in Fig. 1 dargestellten Ausführungsform des Drehschwingungsdämpfers 10 das Koppelelement 18 ein beispielsweise als Blattfeder ausgestaltetes Federelement 32 aufweisen. Über eine Verspannung des Federelements 32 kann die über die Laufrolle 26 aufgeprägte Radialkraft und damit das Rückstellmoment erhöht werden.

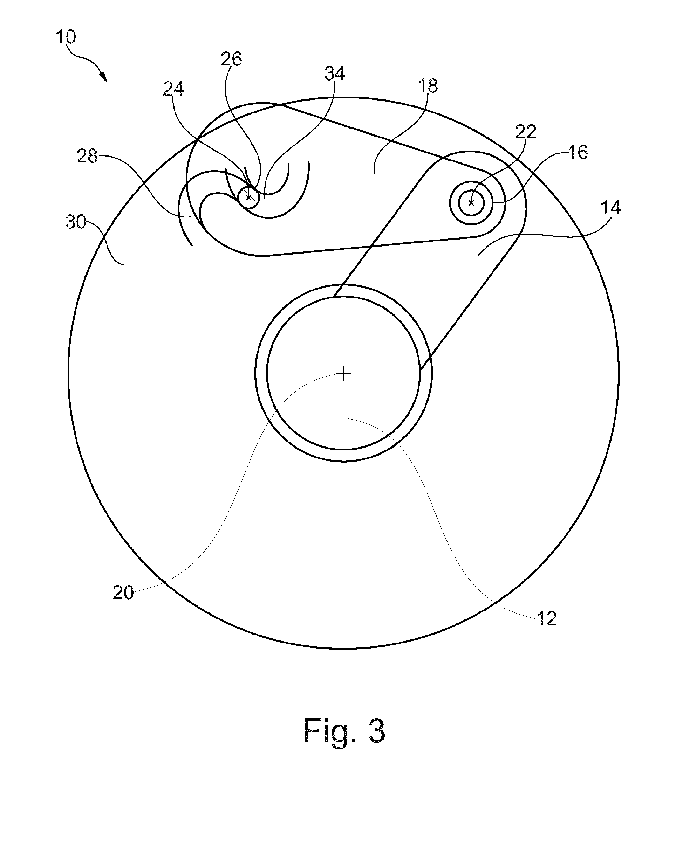

Bei der in Fig. 3 dargestellten Ausführungsform des Drehschwingungsdämpfers 10 kann im Vergleich zu der in Fig. 1 dargestellten Ausführungsform des Drehschwingungsdämpfers 10 die Laufrolle 26 zusätzlich in einer Koppelbogennut 34 des Koppelelements 18 geführt sein. Dadurch kann dann die Schwenkbewegung des Koppelelements 18 um die Koppeldrehachse 22 in einem stärken Ausmaß erfolgen, wodurch sich der Einfluss der Fliehkraft auf das Koppelelement 18 entsprechend der Krümmung der Koppelbogennut 34 verstärken lässt.

### Bezugszeichenliste

- 10: Drehschwingungsdämpfer
- 12: Eingangsscheibe
- 14: Befestigungsarm
- 16: Lager
- 18: Koppelelement
- 20: Drehachse
- 22: Koppeldrehachse
- 24: Rollendrehachse
- 26: Laufrolle
- 28: Bogennut
- 30: Tilgerscheibe
- 32: Federelement
- 34: Koppelbogennut

## Patentansprüche

1. Drehschwingungsdämpfer zum Tilgen und/oder Dämpfen von Drehschwingungen in einem Antriebsstrang eines Kraftfahrzeugs, mit
einer Eingangsscheibe (12) zum Einleiten eines Drehmoments,
einer relativ zur Eingangsscheibe (12) verdrehbare Tilgerscheibe (30) zum Einleiten eines einer Drehschwingung entgegen gerichteten Gegenmoments, wobei die Tilgerscheibe (30) mindestens eine mit einem Anteil in Umfangsrichtung verlaufende Bogennut (28) aufweist,
einer in der Bogennut (28) der Tilgerscheibe (30) geführten Laufrolle (26) und
einem mit der Laufrolle (26) und der Eingangsscheibe (12) verbundenen Koppelelement (18) zur Übertragung eines Drehmoments zwischen der Eingangscheibe (12) und der Tilgerscheibe (30), wobei das Koppelelement (18) um eine zu einer Rollendrehachse (24) der Laufrolle (26) in Umfangsrichtung beabstandete im Wesentlichen axial verlaufende Koppeldrehachse (22) drehbar mit der Eingangsscheibe (12) verbunden ist.

2. Drehschwingungsdämpfer nach Anspruch 1 **dadurch gekennzeichnet, dass** das Koppelelement (18) eine träge Masse aufweist, wobei die träge Masse so hoch ist, dass das Koppelelement (18) oberhalb einer definierten Mindestdrehzahl der Eingangscheibe (12), insbesondere einer Leerlaufdrehzahl eines Kraftfahrzeugmotors, fliehkraftbedingt an einer Verbindungsstelle (16) mit der Eingangsscheibe (12) mit einer nach radial außen gerichteten Normalkraft an der Eingangscheibe (12) angreift.

3. Drehschwingungsdämpfer nach Anspruch 1 oder 2 **dadurch gekennzeichnet, dass** das Koppelelement (18) eine träge Masse aufweist, wobei die träge Masse so hoch ist, dass das Koppelelement (18) oberhalb einer definierten Mindestdrehzahl der Eingangscheibe (12), insbesondere einer Leerlaufdrehzahl eines Kraftfahrzeugmotors, fliehkraftbedingt die Laufrolle (26) nach radial außen gegen die Tilgerscheibe (30) drückt.

4. Drehschwingungsdämpfer nach einem der Ansprüche 1 bis 3 **dadurch gekennzeichnet, dass** das Koppelelement (18) über ein Wälzlager oder Gleitlager mit der Eingangscheibe (12) verbunden ist.

5. Drehschwingungsdämpfer nach einem der Ansprüche 1 bis 4 **dadurch gekennzeichnet, dass** das Koppelelement (18) ein Federelement (32) zur federnden Verbindung der Tilgerscheibe (30) mit der Eingangscheibe (12) aufweist.

6. Drehschwingungsdämpfer nach einem der Ansprüche 1 bis 5 **dadurch gekennzeichnet, dass** das Koppelelement (18) eine Koppelbogennut (34) aufweist, wobei die Laufrolle (26) in der Koppelbogennut (34) geführt ist.

7. Drehschwingungsdämpfer nach einem der Ansprüche 1 bis 6 **dadurch gekennzeichnet, dass** das Koppelelement (18) eine von einer Verbindungsstelle (16) mit der Eingangsscheibe (12) zur Laufrolle (26) verlaufende Längsrichtung aufweist, wobei das Koppelelement (18) in einer in einer Radialebene des Drehschwingungsdämpfers (10) verlaufenden Querrichtung quer zur Längsrichtung eine größere Quererstreckung als die Laufrolle (26) aufweist.

8. Drehschwingungsdämpfer nach Anspruch 7 **dadurch gekennzeichnet, dass** die Quererstreckung des Koppelelements (18) bei der Laufrolle (26) größer als bei der Verbindungsstelle (16) mit der Eingangsscheibe (12) ist.

9. Drehschwingungsdämpfer nach einem der Ansprüche 1 bis 8 **dadurch gekennzeichnet, dass** die Eingangsscheibe (12) einen radial abstehenden Befestigungsarm (14) aufweist, wobei das Koppelelement (18) mit dem Befestigungsarm (14) verbunden ist.

10. Antriebsstrang für eine Kraftfahrzeug mit einem eine Antriebswelle aufweisenden Kraftfahrzeugmotor, einem mit der Antriebswelle koppelbaren mindestens eine Getriebeeingangswelle aufweisenden Kraftfahrzeuggetriebe und mindestens einem Drehschwingungsdämpfer (10) nach einem der Ansprüche 1 bis 9 zur Dämpfung und/oder Tilgung von Drehschwingungen der Antriebswelle, wobei insbesondere die Eingangsscheibe (12) des Drehschwingungsdämpfers (10) mit der Antriebswelle und/oder mit der Getriebeeingangswelle verbunden ist.
